# EUROPEAN PATENT SPECIFICATION

(11) **EP 3 086 606 B1**
(45) Date of publication and mention of the grant of the patent: **16.05.2018**
(21) Application number: 14871897.6
(22) Date of filing: 09.12.2014
(51) Int. Cl.: H04W 52/02, G08B 17/00, G08B 25/10, H04W 4/04, H04W 56/00

(54) **RADIO COMMUNICATION APPARATUS AND RADIO COMMUNICATION SYSTEM**
FUNKKOMMUNIKATIONSVORRICHTUNG UND FUNKKOMMUNIKATIONSSYSTEM
APPAREIL DE COMMUNICATION RADIO ET SYSTÈME DE COMMUNICATION RADIO

(30) Priority: 18.12.2013 JP 2013261630
(43) Date of publication of application: 26.10.2016
(73) Proprietor: Panasonic Intellectual Property Management Co., Ltd., Osaka-shi, Osaka 540-6207 (JP)
(72) Inventor: HOSHIBA, Keitaro, Osaka-shi Osaka 540-6207 (JP); KURITA, Masanori, Osaka-shi Osaka 540-6207 (JP); ANDO, Shinichiro, Osaka-shi Osaka 540-6207 (JP)
(74) Representative: Appelt, Christian W.
(86) International application number: PCT/JP2014/006131
(87) International publication number: WO 2015/093007

(56) References cited:
- EP-A1- 2 360 980
- EP-A1- 2 541 994
- WO-A1-2012/081093
- JP-A- 2007 027 899
- JP-A- 2011 254 409
- US-A1- 2010 046 596

## Description

### Technical Field

The invention relates generally to radio communication apparatuses and radio communication systems and, more particularly, to a radio communication apparatus configured to perform radio communication of which communication medium is radio waves, and a radio communication system including the radio communication apparatus.

### Background Art

An radio communication system (fire alarm system) as a prior art is exemplified in JP Pub. No. 2010-147868 (hereinafter referred to as "Document 1"). In the prior art described in Document 1, each of radio stations intermittently activates its own receiver circuit and checks whether or not the receiver circuit can receive intended radio waves (radio waves of a radio signal transmitted from a different radio station(s) from its own radio station). Each of the radio stations significantly reduces its own average power consumption by immediately stopping its own receiver circuit to shift to a stand-by state if not receiving the radio waves. US 2010/046596 A1 describes a radio communication system that includes a first radio terminal with a first transmitter for transmitting a first data indicative of a specific event, and a second radio terminal with a battery and a receiver. The first radio terminal includes a first bit interpolator which inserts a check bit pattern of "01010101" at a predetermined cycle into one frame of the first data. The second radio terminal has a second power controller which intermittently activates the second receiver at predetermined intervals in order to receive the bit-interpolated data from the first transmitter. A check bit detector is included in the second radio terminal to detect the check bit pattern from within the bit interpolated data and to issue a stop signal immediately upon occurrence of that the check bit pattern fails to appear at said predetermined cycle within a predetermined time frame shorter than one frame length of the first data. In response to the stop signal, the power controller of the second radio terminal terminates a current receiving operation.

However, an intermittent reception operation by each radio station as stated above causes timing of receiving a radio signal to be received fundamentally to be delayed by an intermittent reception interval of a corresponding receiver circuit. It is therefore impossible to simply extend the intermittent reception interval in order to reduce power consumption.

Each of the prior art radio stations is therefore configured to count the passage of each intermittent reception interval in synchronization with each synchronizing signal received at intervals of several hours or several ten hours to transmit a radio signal to other radio stations at timing the passage of each intermittent reception interval has finished being counted. It is accordingly to possible to shorten a delay time until a radio signal transmitted from any of the radio stations is received by other radio stations.

A transmission frame transmitted by a radio signal is typically formed of preamble, unique word, destination address, source address, data and check cord. In order to receive the radio signal to obtain the data in the transmission frame, each radio station requires receiving the signal at the latest from intermediate part of the preamble to establish bit synchronization.

However, if the divergence of intermittent reception intervals to be counted by the radio stations is large, there is a concern that even if the radio waves are received, the preamble cannot be captured whereby the radio signal fails to be received (failure to obtain the transmission frame). In order to enable sure reception of a radio signal by each radio station, if an operation time (a reception period) of each receiver circuit at intermittent reception intervals is made longer than the frame length (time length of the radio signal), average power consumption of each radio station is increased.

### Summary of Invention

The present invention has been achieved in view of the above circumstances, and an object thereof is to make it possible to securely receive a radio signal while reducing power consumption.

A radio communication apparatus of the invention includes a receiver, a controller and a power supply. The receiver is configured to receive a radio signal of which communication medium is radio waves and to demodulate and decode a transmission frame contained in the radio signal. The controller is configured to obtain data from the transmission frame demodulated and decoded by the receiver to process the data. The power supply is configured to energize the receiver and the controller. The controller is configured to: count the passage of each intermittent reception interval with a constant period to activate the receiver whenever the passage of each intermittent reception interval has finished being counted; and stop the receiver when the receiver fails to receive intended radio waves and also, when the receiver receives the intended radio waves, activate the receiver after the elapse of a prescribed stand-by time that is set to be equal to or less than a time until the radio signal is retransmitted.

A radio communication apparatus of the invention includes a receiver, a controller and a power supply. The receiver is configured to receive a radio signal of which communication medium is radio waves and to demodulate and decode a transmission frame contained in the radio signal. The controller is configured to obtain data from the transmission frame demodulated and decoded by the receiver to process the data. The power supply is configured to energize the receiver and the controller. The controller is configured to: count the passage of each intermittent reception interval with a constant period to activate the receiver whenever the passage of each intermittent reception interval has finished being counted; and stop the receiver when the receiver fails to receive intended radio waves and also, when the receiver receives the intended radio waves, extend an operation time of the receiver to a prescribed reception duration time that is set to be equal to or greater than a sum of a time until the radio signal is retransmitted and a transmission period of the radio signal.

A radio communication apparatus of the invention includes a receiver, a transmitter, a controller and a power supply. The receiver is configured to receive a radio signal of which communication medium is radio waves and to demodulate and decode a first transmission frame contained in the radio signal. The transmitter is configured to convert a transmission signal obtained by encoding and modulating a second transmission frame into a radio signal and to transmit it. The controller is configured to obtain data from the first transmission frame demodulated and decoded by the receiver to process the data, and generate the second transmission frame containing data to be transmitted to provide it to the transmitter. The power supply is configured to energize the receiver, the transmitter and the controller. The controller is configured to: count the passage of each intermittent reception interval with a constant period to activate the receiver whenever the passage of each intermittent reception interval has finished being counted; and stop the receiver when the receiver fails to receive intended radio waves and also, when the receiver receives the intended radio waves, generate the second transmission frame containing a message representing a re-transmission request of the first radio signal to activate the receiver after providing the transmitter with the second transmission frame.

A radio communication system of the invention includes one radio communication apparatus of the radio communication apparatuses, and a base station configured to communicate with the radio communication apparatus.

### Brief Description of Drawings

Preferred embodiments of the invention will now be described in further details. Other features and advantages of the present invention will become better understood with regard to the following detailed description and accompanying drawings where:
FIG. 1 is a time chart depicting an operation example of a radio communication apparatus and a radio communication system in accordance with an embodiment of the invention;
FIG. 2 is a block diagram of the radio communication system in accordance with Embodiment 1 of the invention;
FIG. 3 shows a frame format of a transmission frame in Embodiment 1 of the invention;
FIG. 4 is a time chart depicting an operation example of a radio communication apparatus and a radio communication system in accordance with Embodiment 2 of the invention; and
FIG. 5 is a time chart depicting an operation example of a radio communication apparatus and a radio communication system in accordance with Embodiment 3 of the invention;

### Description of Embodiments

### (EMBODIMENT 1)

A radio communication apparatus and a radio communication system in accordance with Embodiment 1 of the invention will be explained with reference to the drawings in detail. In the embodiment, a technical aspect according to the invention is applied to a security system that is configured to be installed in a dwelling and detect a signal(s) regarding crime prevention and protection against disaster to inform a dweller(s) of a detection result, but is not limited to this.

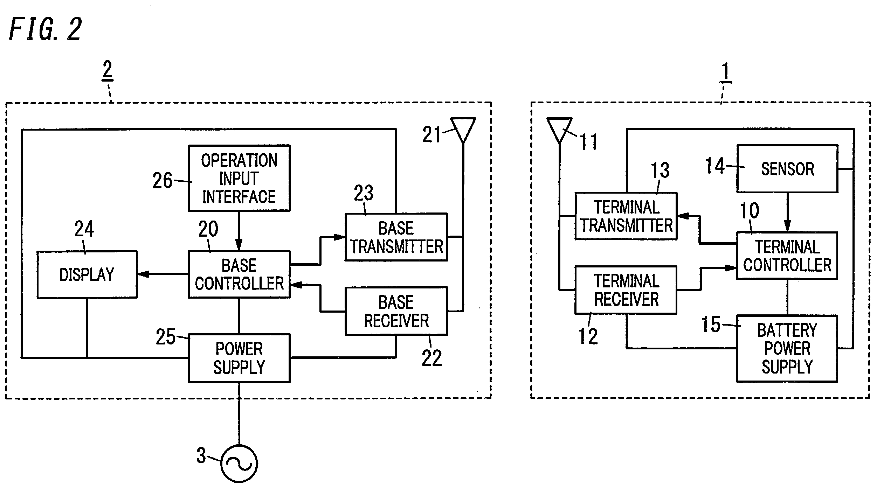

As shown in FIG. 2, the security system (the radio communication system) in the embodiment includes a base station 2 and two or more (only one of them is shown in the figure) terminal stations 1. In the embodiment, each of the terminal stations 1 corresponds to a radio communication apparatus.

The terminal station 1 in the figure includes a terminal controller 10, an antenna 11, a terminal receiver 12, a terminal transmitter 13, a sensor 14 and a battery power supply 15. The terminal receiver 12 is configured to receive a radio signal (a first radio signal) of which communication medium is radio waves and to demodulate and decode a transmission frame 4 (a first transmission frame) contained in the radio signal. The terminal transmitter 13 is configured to convert a transmission signal obtained by encoding and modulating a transmission frame 5 (a second transmission frame) into a radio signal (a second radio signal) to transmit the radio signal.

The sensor 14 is configured to detect the presence, a quantity or the like of a target to convert a detection result into an electric signal. Preferable examples of the sensor 14 include a lock sensor configured to detect whether a lock mounted in place of a window or an entrance door is opened or closed, and a fire sensor configured to sense smoke or heat when fire occurs. However, the sensor 14 is not limited to the lock sensor or the fire sensor, but may be another type sensor as long as it is a sensor configured to detect a signal(s) regarding crime prevention or protection against disaster.

The terminal controller 10 is mainly formed of a microcontroller and configured to perform various processes including a process of allowing the terminal transmitter 13 to transmit a radio signal containing a message representing a detection result by the sensor 14 (e.g., an open or close state of the lock, the occurrence of the fire, or the like). The battery power supply 15 is configured to supply the terminal controller 10, the terminal receiver 12, the terminal transmitter 13 and the sensor 14 with operating power generated by a power supply that is a primary battery or a secondary battery. Each of the terminal stations 1 is configured to not continuously but intermittently perform a reception operation to be described later in order to prevent power consumption of its own battery as much as possible.

The base station 2 includes a base controller 20, an antenna 21, a base receiver 22, a base transmitter 23, a display 24, a power supply 25, an operation input interface 26 and the like. The base receiver 22 is configured to receive radio signals from the terminal stations 1 and demodulate and decode transmission frames 5 (second transmission frames) contained in the radio signals. The base transmitter 23 is configured to convert a transmission signal obtained by encoding and modulating a transmission frame 4 (a first transmission frame) into a radio signal to transmit the radio signal.

The operation input interface 26 includes one or more switches (e.g., push switches). The operation input interface 26 is configured to, when any of the switches is operated, receive an operation input corresponding to the switch operated. The operation input interface 26 is further configured to transmit an operation signal corresponding to the operation input to the base controller 20.

The base controller 20 is mainly formed of a microcontroller like each terminal controller 10 and configured to perform a process in response to a detection result contained in a radio signal from any of the terminal stations 1 as stated later. For example, the base controller 20 is configured to perform various processes including a process of indicating alarm occurrence such as the detection of an intruder or the occurrence of fire by alarm sound or alarm display, and a process of informing a remote destination(s) of the alarm occurrence via any external communicator.

The display 24 is, for example, formed of light emitters such as light emitting diodes and as stated later configured to display a mode selection state of the terminal stations 1 by emitting light (being lit) when the terminal stations 1 are in a warning mode and by being extinguished (being unlit) in the case of a non-warning mode. The power supply 25 is configured to convert AC power supplied from an external power supply (e.g., a commercial AC power supply 3) into DC power to energize the base controller 20, the base receiver 22, the base transmitter 23 and the display 24. Since the base station 2 is energized by the external power supply, the base receiver 22 is in a continuous operation state (a reception standby state), in a mode(s) exclusive of a transmission mode unlike the terminal stations 1. The base station 2 may however be configured to be energized by a battery power supply like the terminal stations 1.

The base station 2 and each terminal station 1 have respective unique identification codes assigned that are stored in respective memories of the base controller 20 and the terminal controller 10. The destination and source of a radio signal are identified by the identification codes.

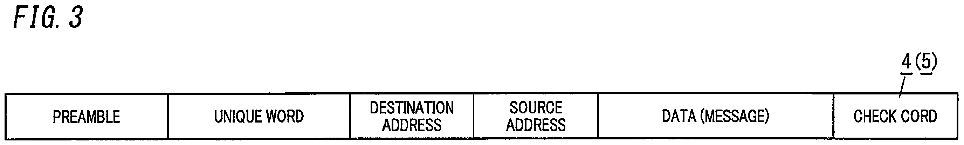

FIG. 3 shows a frame format of the transmission frame 4 in the security system of the embodiment. That is, one frame is formed of sync bit (preamble), frame sync pattern (unique word), destination address, source address, data (message) and check cord. When any one of the identification codes is set to the destination address, only one of the base station 2 and the terminal stations 1, to which the identification code is assigned, is to receive a radio signal containing it to obtain the message therefrom. However, when a special bit stream (e.g., a bit stream each bit of which is 1) unused by the base station 2 and every terminal station 1 is set to the destination address, a radio signal with it is to be broadcast (multicast) and the message is to be obtained by the base station 2 and every terminal station 1. For example, a radio signal containing a control command for mode selection is to be broadcast from the base station 2 to every terminal station 1. The transmission frame 5 (the second transmission frame) also has the same frame format as that of the transmission frame 4 (the first transmission frame).

In the embodiment, each of the terminal stations 1 is configured to perform an intermittent reception operation in the mode(s) exclusive of the transmission mode of a radio signal in order to prolong the life of the battery in its own battery power supply 15 as stated above. That is, each terminal controller 10 is configured to: repeatedly count the passage of each intermittent reception interval with a constant period though a timer to activate a corresponding terminal receiver 12 whenever the passage of each intermittent reception interval has finished being counted, thereby checking whether or not intended radio waves (a radio signal transmitted from the base station 2) can be received. The timer is built in a corresponding microcomputer. Each terminal controller 10 is further configured to, when failing to receive the radio waves, immediately stop a corresponding terminal receiver 12 to shift it to a stand-by state, thereby remarkably reducing its own power consumption. It is noted that each terminal controller 10 performs a reception check of a radio signal based on a receiving signal strength indication signal (an RSSI signal) from a corresponding terminal receiver 12. The RSSI signal is a DC voltage signal in proportion to the size of the receiving signal strength while the corresponding terminal receiver 12 is receiving the radio signal.

A terminal controller 10 of each terminal station 1 is configured to alternatively select an operation mode (a warning mode) for transmitting a radio signal containing a detection result of a corresponding sensor 14 to the base station 2 or an operation mode (a non-warning mode) for not transmitting the radio signal containing the detection result of the corresponding sensor 14 to the base station 2. The terminal controller 10 is also configured to select the warning mode or the non-warning mode in accordance with an instruction (a control command) from the base station 2. For example, the non-warning mode is a mode selected when a person(s) (a dweller(s) or an employee(s)) is(are) in a target area (a dwelling, a store, an office, a factory or the like). The warning mode is a mode selected when no person is in the target area. In the non-warning mode, the terminal controller 10 is configured to stop the sensor 14, or to stop the radio signal containing the detection result from being transmitted while activating the sensor 14.

The operation input interface 26 of the base station 2 is provided with a mode select switch. The operation input interface 26 is configured to receive an operation input for mode selection when the switch is operated and to transmit an operation signal corresponding to the operation input to the base controller 20. When the operation signal for mode selection is received, the base controller 20 generates a transmission frame 4 which contains a control command for allowing each terminal station 1 to select the warning mode or the non-warning mode and which contains multicast address (a bit stream) as the transmission address. The base controller 20 provides the base transmitter 23 with the transmission frame 4 generated. The base transmitter 23 generates a transmission signal (a first transmission signal) by encoding and modulating the transmission frame 4 from the base controller 20 and converts the transmission signal generated into a radio signal to transmit the radio signal through the antenna 21.

The radio signal from the base station 2 is received by a terminal receiver 12 of each terminal station. The terminal receiver 12 obtains the transmission frame 4 by demodulating and decoding the radio signal received (a received signal) to provide a corresponding terminal controller 10 with data (the control command) contained in the transmission frame 4.

The terminal controller 10 selects the warning mode or the non-warning mode based on the control command from the terminal receiver 12. The terminal controller 10 further generates a transmission frame 5 (a second transmission frame) containing a response message (an ACK message) to the control command and provides a corresponding terminal transmitter 13 with the transmission frame. The terminal transmitter 13 generates a transmission signal (a second transmission signal) by encoding and modulating the transmission frame 5 from the terminal controller 10 and converts the transmission signal generated into a radio signal to transmit the radio signal through a corresponding antenna 11.

When receiving response messages representing successful mode selection from every terminal station 1, the base controller 20 of the base station 2 allows the display 24 to indicate a corresponding mode selection state and finishes the mode selection process.

A terminal controller 10 of each terminal station 1 is also configured to receive a synchronizing signal at fixed intervals (of e.g., several tens of minutes to several hours) from the base station 2, and to start counting the passage of an intermittent reception interval at a time point after the elapse of a prescribed time from a time point the synchronizing signal has been received. It is accordingly possible to establish synchronization of each intermittent reception interval between the base station 2 and every terminal station 1. The base controller 20 can therefore allow the base transmitter 23 to transmit a radio signal in synchronization with each intermittent reception interval. As a result, every terminal station 1 can receive a radio signal at extremely short transmission intervals and shorten a waiting time for mode selection by a dweller(s) or an employee(s).

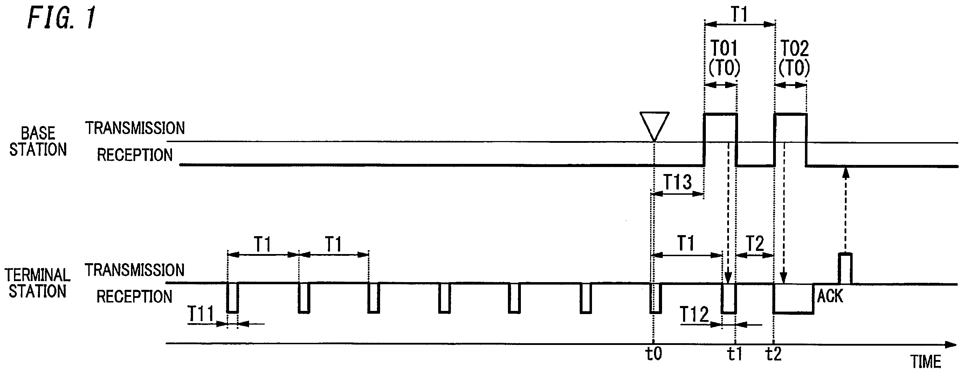

Transmission and reception operations for mode selection in the embodiment will be explained in detail with reference to a time chart in FIG. 1.

For example, when each terminal station 1 operates in the non-warning mode, the mode select switch of the base station 2 is operated (at time t0 in FIG. 1). When receiving an operation signal for mode selection from the operation input interface 26 as stated above, the base controller 20 generates a transmission frame 4. The transmission frame 4 is a frame which contains a control command for allowing each terminal station 1 to select the warning mode instead of the non-warning mode and which contains multicast address as the transmission address. The base transmitter 23 converts a transmission signal (a first transmission signal) obtained by encoding and modulating the transmission frame 4 generated by the base controller 20 into a radio signal to transmit the radio signal. At this moment, the base controller 20 controls the base transmitter 23 so that the radio signal is transmitted at timing when it finishes counting the passage of an intermittent reception interval T1. That is, the base controller 20 controls the base transmitter 23 so that the radio signal is transmitted at the intermittent reception intervals T1.

On the other hand, whenever the passage of each intermittent reception interval T1 has finished being counted, a terminal controller 10 of each terminal station 1 activates a corresponding terminal receiver 12 to allow it to receive a radio signal. That is, a terminal controller 10 of each terminal station 1 activates a corresponding terminal receiver 12 at the intermittent reception intervals T1 to allow it receive a radio signal. The terminal controller 10 immediately stops the terminal receiver 12 when an RSSI signal from the terminal receiver 12 is below a threshold. The terminal controller 10 also keeps the terminal receiver 12 operating when the RSSI signal is equal to or greater than the threshold.

It is usually considered that timing the terminal controller 10 activates the terminal receiver 12 accords with timing the base controller 20 allows the base transmitter 23 to transmit a radio signal. The terminal receiver 12 can accordingly capture the preamble of a radio signal from the base transmitter 23 to establish bit synchronization and then capture the unique word thereof to establish frame synchronization to demodulate and decode the transmission frame 4 of the radio signal. When the terminal receiver 12 provides the terminal controller 10 with the data (the control command) contained in the transmission frame 4 demodulated and decoded, the terminal controller 10 selects the warning mode instead of the non-warning mode according to the control command. The terminal controller 10 further generates a transmission frame 5 which contains a response message (ACK) to the control command and which contains the identification code of the base station 2 as the transmission address, and provides a corresponding terminal transmitter 13 with the transmission frame.

The base receiver 22 obtains the transmission frame 5 by demodulating and decoding a radio signal from each the terminal station 1, and provides the base controller 20 with the response message contained in the transmission frame 5. When the base controller 20 has received the response message from every terminal station 1, the base controller 20 changes the indication of the display 24 to indicate that the warning mode is selected instead of the non-warning mode.

However, at least a terminal receiver 12 may fail to receive the preamble of a radio signal if a large time lag (see the time period T13 in FIG. 1) occurs between the intermittent reception interval T1 counted by the base controller 20 and the intermittent reception interval T1 counted by a corresponding terminal controller 10. If the terminal receiver 12 fails to capture the preamble, it cannot establish bit synchronization and frame synchronization and therefore receive the radio signal. If the terminal receiver 12 cannot receive the radio signal, the terminal controller 10 cannot return a radio signal containing a response message to the base station 2.

When failing to receive each response message from every terminal station 1 until the elapse of a prescribed time (<T1) after a first radio signal is transmitted, the base controller 20 allows the base transmitter 23 to retransmit a radio signal obtained by encoding and modulating the same transmission frame 4 as previous one. For example, a period the base transmitter 23 retransmits the radio signal is equal to each intermittent reception interval T1 (see FIG. 1). However, the period the base transmitter 23 retransmits the radio signal may be different from each intermittent reception interval T1. For example, the period the base transmitter 23 retransmits the radio signal may be shorter than each intermittent reception interval T1. In this case, it is possible to increase the transmission speed from the base transmitter 23 to the terminal receiver 12.

On the other hand, when the terminal receiver 12 fails to receive a radio signal, the terminal controller 10 reactivates the terminal receiver 12 after the elapse of a prescribed stand-by time T2 from a time point the RSSI signal of the terminal receiver 12 is below the threshold. The stand-by time T2 (T2 ≤ T1 - T01) is set to be equal to or less than a time until the base station 2 retransmits the radio signal (T1 - T01, T01 is a transmission time of the base station 2).

Thus, since the terminal receiver 12 is to be activated at timing (a start point t2) the base transmitter 23 retransmits the radio signal at the latest, the terminal receiver 12 can surely receive the radio signal retransmitted. The terminal controller 10 further generates a transmission frame 5 which contains a response message (an ACK message) to the control command and which contains the identification code of the base station 2 as the transmission address, and provides a corresponding terminal transmitter 13 with the transmission frame 5. The terminal transmitter 13 converts a transmission signal obtained by encoding and modulating the transmission frame 5 from the terminal controller 10 into a radio signal to transmit the radio signal.

The base receiver 22 obtains the transmission frame 5 by demodulating and decoding the radio signal from a corresponding terminal station 1 to provide the base controller 20 with the response message in the transmission frame 5. If receiving the response message from the terminal station 1, the base controller 20 finishes retransmitting the radio signal. An operation for selecting the non-warning mode instead of the warning mode is also performed according to the similar process.

As stated above, the radio communication apparatus (a terminal station 1) of the embodiment includes a receiver (a terminal receiver 12) configured to receive a radio signal of which communication medium is radio waves and to demodulate and decode a transmission frame 4 contained in the radio signal. The radio communication apparatus (the terminal station 1) of the embodiment also includes a controller (a terminal controller 10) configured to obtain data from the transmission frame 4 demodulated and decoded by the receiver (the terminal receiver 12) to process the data. The radio communication apparatus (the terminal station 1) of the embodiment further includes a power supply (a battery power supply 15) configured to energize the receiver (the terminal receiver 12) and the controller (the terminal controller 10). The controller (the terminal controller 10) is configured to count the passage of each intermittent reception interval T1 with a constant period to activate the receiver (the terminal receiver 12) whenever the passage of each intermittent reception interval T1 has finished being counted. The controller (the terminal controller 10) is configured to stop the receiver (the terminal receiver 12) when the receiver (the terminal receiver 12) fails to receive intended radio waves. The controller (the terminal controller 10) is further configured to, when the receiver (the terminal receiver 12) receives the intended radio waves, activate the receiver (the terminal receiver 12) after the elapse of a prescribed stand-by time T2. The stand-by time T2 is set to be equal to or less than a time (T1 - T01) until the radio signal is retransmitted.

In other words, the controller (the terminal controller 10) is configured to activate the receiver (the terminal receiver 12) at regular periods according to each intermittent reception interval T1 with the constant period. The controller (the terminal controller 10) is configured to, when the receiver fails to receive the intended radio waves from a start point the receiver (the terminal receiver 12) is activated until the elapse of a reception period T11, stop the receiver after the elapse of the reception period T11. The reception period T11 is a time period shorter than each intermittent reception interval T1. The controller is configured to, when the receiver receives the intended radio waves from the start point the receiver is activated until the elapse of the reception period T11, activate the receiver after the elapse of a prescribed stand-by time T2 from an end point t1 of a reception period T12 the receiver receives the intended radio waves. The stand-by time T2 is set to be equal to or less than a time (T1 - T01) from the end point t1 of the transmission period T01 the radio signal is transmitted until a start point t2 of a re-transmission period T02 the radio signal is retransmitted. The receiver (the terminal receiver 12) can accordingly receive the radio signal.

In the embodiment, since the receiver (the terminal receiver 12) to be activated at intermittent reception intervals T1 has the shorter reception period T11, the radio communication apparatus (the terminal station 1) can reduce its own power consumption in comparison with the case where the reception period is extended. Moreover, the radio communication apparatus (the terminal station 1) of the embodiment can not only have the shorter reception period T11 but also surely receive the radio signal.

That is, the radio communication apparatus (the terminal station 1) and the radio communication system (the security system) in the embodiment can surely receive, through the receiver (the terminal receiver 12), the radio signal retransmitted without extending the reception period T11. It is accordingly possible to surely receive the radio signal while reducing the power consumption.

In the radio communication apparatus (the terminal station 1) of the embodiment, it is preferable that the controller (the terminal controller 10) be configured to, when the receiver (the terminal receiver 12) receives the intended radio waves, activate the receiver after the elapse of the stand-by time T2 from the end point t1 of the reception period the receiver receives the intended radio waves.

In this case, preferably the end point t1 of the reception period the receiver (the terminal receiver 12) receives the intended radio waves is a point a receiving signal strength indication signal (an RSSI signal) of the receiver is below a threshold. That is, it is preferable that the end point t1 be a point the RSSI signal of the receiver changes from the threshold or more to below the threshold.

### (EMBODIEMNT 2)

A radio communication apparatus (terminal stations 1) and a radio communication system (a security system) in accordance with Embodiment 2 of the invention will be explained with reference to the drawings in detail. Basic configuration and operation of the terminal stations 1 and the security system in the embodiment are common to those of Embodiment 1, and accordingly identical constituent elements to those of Embodiment 1 have been allocated identical reference numerals, and description and drawings thereof have been omitted as appropriate.

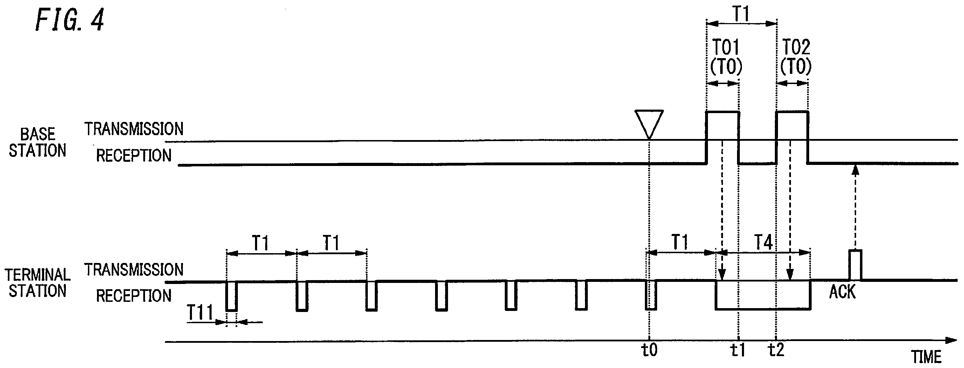

Transmission and reception operations for mode selection in the embodiment will be explained in detail with reference to a time chart in FIG. 4.

A terminal controller 10 of each terminal station in the embodiment is configured to, when a corresponding terminal receiver 12 fails to receive preamble, extend an operation time of the terminal receiver 12 from a reception period T11 up to a prescribed reception duration time T4. The reception duration time T4 (T1 ≤ T4) is set to be equal to or greater than a sum (i.e., an intermittent reception interval T1) of a time (T1 - T01) until a base station 2 retransmits a radio signal (a first radio signal) and a transmission period T0 of the radio signal.

As a result, the terminal receiver 12 operates at a re-transmission time (timing) T02 a base transmitter 23 retransmits the radio signal at the latest. Therefore, the terminal receiver 12 can surely receive the radio signal retransmitted.

As stated above, a radio communication apparatus (a terminal station 1) of the embodiment includes a receiver (a terminal receiver 12) configured to receive a radio signal of which communication medium is radio waves and to demodulate and decode a transmission frame contained in the radio signal. The radio communication apparatus (the terminal station 1) of the embodiment also includes a controller (a terminal controller 10) configured to obtain data from the transmission frame 4 demodulated and decoded by the receiver (the terminal receiver 12) to process the data. The radio communication apparatus (the terminal station 1) of the embodiment further includes a power supply (a battery power supply 15) configured to energize the receiver (the terminal receiver 12) and the controller (the terminal controller 10). The controller (the terminal controller 10) is configured to count the passage of each intermittent reception interval T1 with a constant period and to activate the receiver (the terminal receiver 12) whenever the passage of each intermittent reception interval T1 has finished being counted. The controller (the terminal controller 10) is configured to stop the receiver (the terminal receiver 12) when the receiver (the terminal receiver 12) fails to receive intended radio waves. The controller (the terminal controller 10) is further configured to, when the receiver (the terminal receiver 12) receives the intended radio waves, extend an operation time of the receiver (the terminal receiver 12) up to a prescribed reception duration time T4. The reception duration time T4 is set to be equal to or greater than a sum of a time (T1 - T0) until the radio signal is retransmitted and a transmission period T0 of the radio signal.

In other words, the controller (the terminal controller 10) is configured to activate the receiver (the terminal receiver 12) at regular periods according to each intermittent reception interval T1 with the constant period. The controller (the terminal controller 10) is configured to, when the receiver (the terminal receiver 12) fails to receive the intended radio waves from a start point the receiver is activated until the elapse of a reception period T11, stop the receiver after the elapse of the reception period T11. The reception period T11 is a time period shorter than each intermittent reception interval T1. The controller is configured to, when the receiver receives the intended radio waves from the start point the receiver is activated until the elapse of the reception period T11, extend the operation time of the receiver from the reception period T11 up to the prescribed reception duration time T4. The reception duration time T4 is set to be equal to or greater than a sum of a time (T1 - T01), from an end point t1 of a transmission period T01 the radio signal is transmitted until a start point t2 of a re-transmission period T02 the radio signal is retransmitted, and the transmission period T01 of the radio signal. The receiver (the terminal receiver 12) can accordingly receive the radio signal.

In the embodiment, since the receiver (the terminal receiver 12) to be activated at intermittent reception intervals T1 has the shorter reception period T11, the radio communication apparatus (the terminal station 1) can reduce the power consumption in comparison with the case where the reception period is extended. Moreover, the radio communication apparatus (the terminal station 1) of the embodiment can not only have the shorter reception period T11 but also surely receive the radio signal.

That is, the radio communication apparatus (the terminal station 1) and the radio communication system (the security system) in the embodiment can surely receive, through the receiver (the terminal receiver 12), the radio signal retransmitted without extending the reception period T11. It is accordingly possible to surely receive the radio signal while reducing the power consumption.

### (EMBODIMENT 3)

A radio communication apparatus (terminal stations 1) and a radio communication system (a security system) in accordance with Embodiment 3 of the invention will be explained. Basic configuration and operation of the terminal stations 1 and the security system in the embodiment are common to those of Embodiment 1, and accordingly identical constituent elements to those of Embodiment 1 have been allocated identical reference numerals, and description and drawings thereof have been omitted as appropriate.

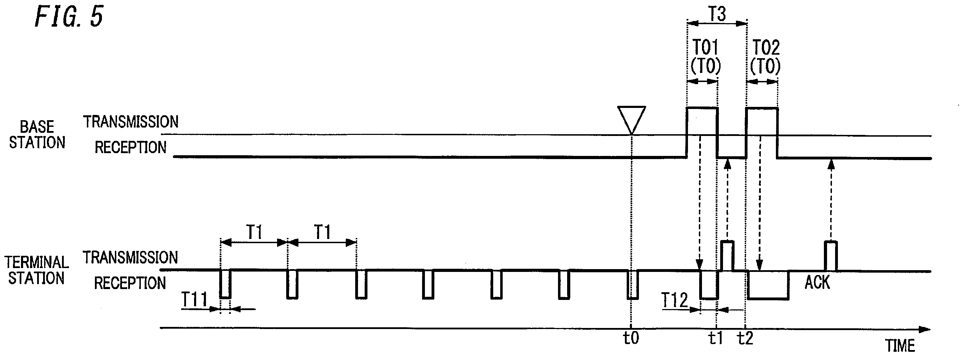

Transmission and reception operations for mode selection in the embodiment will be explained in detail with reference to a time chart in FIG. 5.

A terminal controller 10 of each terminal station in the embodiment is to, when a corresponding terminal receiver 12 fails to receive preamble, generate a transmission frame 5 (a second transmission frame) which contains a message representing a re-transmission request and which contains an identification code of a base station 2 as transmission address and to provide a corresponding terminal transmitter 13 with the transmission frame. The terminal transmitter 13 converts a transmission signal (a second transmission signal) obtained by encoding and modulating the transmission frame 5 from the terminal controller 10 into a radio signal (a second radio signal).

A base receiver 22 obtains the transmission frame 5 by demodulating and decoding the radio signal from the terminal station 1 and provides a base controller 20 with the message representing the re-transmission request contained in the transmission frame 5. When receiving the message representing the re-transmission request, the base controller 20 stops counting the passage of an intermittent reception interval T1 and allows a base transmitter 23 to retransmit a radio signal (a first radio signal) obtained by encoding and modulating an identical transmission frame 4 (a first transmission frame). At this moment, a re-transmission interval T3 the base station 2 retransmits the radio signal is shorter than the intermittent reception interval T1 (T3 < T1).

The terminal controller 10 activates the terminal receiver 12 after allowing the terminal transmitter 13 to retransmit the radio signal containing the message representing the re-transmission request. Because the operation time of the terminal receiver 12 therefore accords with the re-transmission timing of the radio signal from the base transmitter 23, the terminal receiver 12 can surely receive the radio signal retransmitted.

As stated above, a radio communication apparatus (a terminal station 1) of the embodiment includes a receiver (a terminal receiver 12) configured to receive a first radio signal of which communication medium is radio waves and to demodulate and decode a first transmission frame (a transmission frame 4) contained in the first radio signal. The radio communication apparatus (the terminal station 1) of the embodiment includes a transmitter (a terminal transmitter 13) configured to convert a transmission signal obtained by encoding and modulating a second transmission frame (a transmission frame 5) into a second radio signal and to transmit the second radio signal. The radio communication apparatus (the terminal station 1) of the embodiment also includes a controller (a terminal controller 10). The controller (the terminal controller 10) is configured to obtain first data from the first transmission frame (the transmission frame 4) demodulated and decoded by the receiver (the terminal receiver 12) to process the first data. The controller (the terminal controller 10) is configured to generate a second transmission frame (a transmission frame 5) containing second data to be transmitted to provide the transmitter (the terminal transmitter 13) with the second transmission frame. The radio communication apparatus (the terminal station 1) of the embodiment further includes a power supply (a battery power supply 15) configured to energize the receiver (the terminal receiver 12), the transmitter (the terminal transmitter 13) and the controller (the terminal controller 10). The controller (the terminal controller 10) is configured to count the passage of each intermittent reception interval T1 with a constant period to activate the receiver (the terminal receiver 12) whenever the passage of each intermittent reception interval T1 has finished being counted. The controller (the terminal controller 10) is configured to stop the receiver (the terminal receiver 12) when the receiver (the terminal receiver 12) fails to receive intended radio waves. The controller (the terminal controller 10) is configured to generate a second transmission frame (a transmission frame 5) when the receiver (the terminal receiver 12) receives the intended radio waves and to activate the receiver (the terminal receiver 12) after providing the terminal transmitter 13 with the second transmission frame. The second transmission frame contains a message representing a re-transmission request of the first radio signal.

In other words, the controller (the terminal controller 10) is configured to activate the receiver (the terminal receiver 12) at regular periods according to each intermittent reception interval T1 with a constant period. The controller (the terminal controller 10) is configured to, when the receiver (the terminal receiver 12) fails to receive the intended radio waves from a start point the receiver is activated until the elapse of a reception period T11, stop the receiver after the elapse of the reception period T11. The reception period T11 is a time period shorter than each intermittent reception interval T1. The controller is configured to: when the receiver receives the intended radio waves from the start point the receiver is activated until the elapse of the reception period T11, pause the receiver; and activate the receiver after generating the second transmission frame to provide the transmitter (the terminal transmitter 13) with the second transmission frame. The second transmission frame contains a message representing a re-transmission request of the first radio signal.

In the embodiment, since the receiver (the terminal receiver 12) to be activated at intermittent reception intervals T1 has the shorter reception period T11, the radio communication apparatus (the terminal station 1) can reduce the power consumption in comparison with the case where the reception period is extended. Moreover, the radio communication apparatus (the terminal station 1) of the embodiment can not only have the shorter reception period T11 but also surely receive the radio signal (the first radio signal).

That is, the radio communication apparatus (the terminal station 1) and the radio communication system (the security system) in the embodiment can surely receive, through the receiver (the terminal receiver 12), the radio signal (the first radio signal) retransmitted without extending the reception period T11. It is accordingly possible to surely receive the radio signal while reducing the power consumption.

Any terminal controller 10 of Embodiments 1 to 3 is to start counting the passage of each intermittent reception interval T1 in synchronization with a synchronizing signal received by a corresponding terminal receiver 12. The synchronizing signal may fail to be received by the terminal receiver 12 due to the influence of external noise. It is therefore preferable that each terminal controller 10 be configured to, when the synchronizing signal fails to be received, keep a corresponding terminal receiver 12 operating. In such a configuration, the terminal receiver 12 can have increased chances of receiving the synchronizing signal and the terminal controller 10 can quickly recover from out of synchronization.

Although the present invention has been described with reference to certain preferred embodiments, numerous modifications and variations thereof can be made by those skilled in the art within the appended claims.

## Claims

1. A radio communication apparatus (1), comprising:
a receiver (12) configured to receive a radio signal of which communication medium is radio waves and to demodulate and decode a transmission frame (4) contained in the radio signal;
a controller (10) configured to obtain data from the transmission frame (4) demodulated and decoded by the receiver (12) to process the data; and
a power supply (15) configured to energize the receiver (12) and the controller (10), wherein
the controller (10) is configured to:
receive a synchronizing signal from a base station (2) at fixed intervals;
after elapse of a prescribed time from a time point the synchronizing signal has been received, count passage of an intermittent reception interval (T1) with a constant period to activate the receiver (12) whenever passage of each intermittent reception interval (T1) has finished being counted; and
stop the receiver (12) immediately to shift the receiver (12) to a stand-by-state,
when a receiving signal strength indication signal from the receiver (12) is below a threshold,
keep the receiver (12) operating when the receiving signal strength indication signal from the receiver (12) is equal to or greater than the threshold wherein the receiver (12) captures a preamble of the radio signal, and
reactivate the receiver (12) after elapse of a prescribed stand-by time (T2) from a time point the receiving signal strength indication signal of the receiver (12) is below the threshold, the stand-by time (T2) being set to be equal to or less than a time until the radio signal is retransmitted.

2. A radio communication apparatus (1), comprising:
a receiver (12) configured to receive a radio signal of which communication medium is radio waves and to demodulate and decode a transmission frame (4) contained in the radio signal;
a controller (10) configured to obtain data from the transmission frame (4) demodulated and decoded by the receiver (12) to process the data; and
a power supply (1) configured to energize the receiver (12) and the controller (10), wherein
the controller (10) is configured to:
receive a synchronizing signal from a base station (2) at fixed intervals;
after elapse of a prescribed time from a time point the synchronizing signal has been received, count passage of an intermittent reception interval (T1) with a constant period to activate the receiver (12) whenever passage of each intermittent reception interval (T1) has finished being counted; and
stop the receiver (12) immediately to shift the receiver (12) to a stand-by-state when a receiving signal strength indication signal from the receiver (12) is below a threshold,
keep the receiver (12) operating when the receiving signal strength indication signal from the receiver (12) is equal to or greater than the threshold wherein the receiver (12) captures a preamble of the radio signal, and,
extend an operation time of the receiver (12) up to a prescribed reception duration time (T₄) that is set to be equal to or greater than a sum of a time until the radio signal is retransmitted and a transmission period of the radio signal, when the receiver (12) fails to receive the preamble of the radio signal.

3. A radio communication apparatus (1), comprising:
a receiver (12) configured to receive a first radio signal of which communication medium is radio waves and to demodulate and decode a first transmission frame contained in the first radio signal;
a transmitter (13) configured to convert a transmission signal obtained by encoding and modulating a second transmission frame into a second radio signal and to transmit the second radio signal;
a controller (10) configured to
obtain first data from the first transmission frame demodulated and decoded by the receiver (12) to process the first data, and
generate the second transmission frame containing second data to be transmitted to provide the transmitter (13) with the second transmission frame; and
a power supply (15) configured to energize the receiver (12), the transmitter (13) and the controller (10), wherein
the controller (10) is configured to:
receive a synchronizing signal from a base station (2) at fixed intervals;
after elapse of a prescribed time from a time point the synchronizing signal has been received, count passage of an intermittent reception interval (T1) with a constant period to activate the receiver (12) whenever passage of each intermittent reception interval (T1) has finished being counted; and
stop the receiver (12) immediately to shift the receiver (12) to a stand-by-state when a receiving signal strength indication signal from the receiver (12) is below a threshold,
keep the receiver (12) operating when the receiving signal strength indication signal from the receiver is equal to or greater than the threshold wherein the receiver (12) captures a preamble of a first radio signal, and,
generate the second transmission frame containing a message representing a re-transmission request of the first radio signal to activate the receiver (12) after providing the transmitter (13) with the second transmission frame when the receiver (12) fails to capture the preamble of the first radio signal.

4. The radio communication apparatus (1) of any one of claims 1 to 3, wherein
the controller (10) is configured to
start counting passage of each intermittent reception interval (T1) in synchronization with the synchronizing signal received by the receiver (12), and
continuously operate the receiver (12) when the synchronizing signal fails to be received.

5. The radio communication apparatus (1) of claim 1, wherein the controller (10) is configured to, when the receiver (12) receives the intended radio waves, activate the receiver (12) after the elapse of the stand-by time (T2) from an end point of a reception period the receiver (12) receives the intended radio waves.

6. The radio communication apparatus (1) of claim 5, wherein the end point of the reception period the receiver (12) receives the intended radio waves is a point a receiving signal strength indication signal of the receiver (12) falls below a threshold.

7. The radio communication apparatus (1) of any one of claims 1 to 6, wherein when the receiver (12) captures the preamble of the radio signal to establish bit synchronization and then captures an unique word thereof to establish frame synchronization to demodulate and decode the transmission frame (4) of the radio signal.

8. A radio communication system, comprising:
a radio communication apparatus (1) of any one of claims 1 to 7; and
a base station configured to communicate with the radio communication apparatus (1).

## Patentansprüche

1. Funkkommunikationsvorrichtung (1), aufweisend:
einen Empfänger (12), der dazu eingerichtet ist, ein Funksignal zu empfangen, dessen Kommunikationsmedium Funkwellen sind, und einen Übertragungsrahmen (4) zu demodulieren und zu decodieren, der in dem Funksignal enthalten ist;
eine Steuereinrichtung (10), die dazu eingerichtet ist, von dem Übertragungsrahmen (4), der durch den Empfänger (12) demoduliert und decodiert ist, Daten zu erlangen, um die Daten zu verarbeiten; und
eine Stromzufuhr (15), die dazu eingerichtet ist, den Empfänger (12) und die Steuereinrichtung (10) mit Strom zu versorgen, wobei
die Steuereinrichtung (10) für Folgendes ausgelegt ist:
Empfangen eines Synchronisationssignals von einer Basisstation (2) in festen Intervallen;
nach dem Verstreichen einer vorbestimmten Zeitspanne ausgehend von einem Zeitpunkt, in dem das Synchronisationssignal empfangen wurde, Zählen eines Durchgangs eines periodischen Empfangsintervalls (T1) mit einer konstanten Periode, um den Empfänger (12) immer dann zu aktivieren, wenn ein Durchgang jedes periodischen Empfangsintervalls (T1) zu Ende gezählt ist; und
unmittelbares Anhalten des Empfängers (12), um den Empfänger (12) in einen Bereitschaftszustand zu versetzen, wenn ein Empfangssignalstärkeanzeigesignal von dem Empfänger (12) unterhalb eines Schwellwerts liegt,
Weiterbetreiben des Empfängers (12), wenn das Empfangssignalstärkeanzeigesignal von dem Empfänger (12) größer oder gleich dem Schwellwert ist, wobei der Empfänger (12) eine Präambel des Funksignals erfasst, und
Reaktivieren des Empfängers (12) nach einem Verstreichen einer vorgegebenen Bereitschaftszeit (T2) ausgehend von einem Zeitpunkt, in dem das Empfangssignalstärkeanzeigesignal des Empfängers (12) den Schwellwert unterschreitet, wobei die Bereitschaftszeit (T2) eingestellt ist, um kleiner oder gleich einer Zeitspanne zu sein, bis das Funksignal zurückgesendet ist.

2. Funkkommunikationsvorrichtung (1), aufweisend:
einen Empfänger (12), der dazu eingerichtet ist, ein Funksignal zu empfangen, dessen Kommunikationsmedium Funkwellen sind, und einen Übertragungsrahmen (4) zu demodulieren und zu decodieren, der in dem Funksignal enthalten ist;
eine Steuereinrichtung (10), die dazu eingerichtet ist, von dem Übertragungsrahmen (4), der durch den Empfänger (12) demoduliert und decodiert ist, Daten zu erlangen, um die Daten zu verarbeiten; und
eine Stromzufuhr (1), die dazu eingerichtet ist, den Empfänger (12) und die Steuereinrichtung (10) mit Strom zu versorgen, wobei
die Steuereinrichtung (10) für Folgendes ausgelegt ist:
Empfangen eines Synchronisationssignals von einer Basisstation (2) in festen Intervallen;
nach einem Verstreichen einer vorbestimmten Zeitspanne ausgehend von einem Zeitpunkt, in dem das Synchronisationssignal empfangen wurde, Zählen eines Durchgangs eines periodischen Empfangsintervalls (T1) mit einer konstanten Periode, um den Empfänger (12) immer dann zu aktivieren, wenn ein Durchgang jedes periodischen Empfangsintervalls (T1) zu Ende gezählt ist; und
unmittelbares Anhalten des Empfängers (12), um den Empfänger (12) in einen Bereitschaftszustand zu versetzen, wenn ein Empfangssignalstärkeanzeigesignal von dem Empfänger (12) unterhalb eines Schwellwerts liegt,
Aufrechterhalten des Betriebs des Empfängers (12), wenn das Empfangssignalstärkeanzeigesignal von dem Empfänger (12) größer oder gleich dem Schwellwert ist, wobei der Empfänger (12) eine Präambel des Funksignals erfasst, und
Verlängern einer Betriebszeit des Empfängers (12) bis zu einer vorgegebenen Empfangsdauer (T4), die eingestellt ist, um größer oder gleich einer Summe einer Zeitspanne, bis das Funksignal zurückgesendet ist, und einer Übertragungsperiode des Funksignals zu sein, wenn der Empfänger (12) nicht in der Lage ist, die Präambel des Funksignals zu empfangen.

3. Funkkommunikationsvorrichtung (1), aufweisend:
einen Empfänger (12), der dazu eingerichtet ist, ein erstes Funksignal zu empfangen, dessen Kommunikationsmedium Funkwellen sind, und einen ersten Übertragungsrahmen zu demodulieren und zu decodieren, der in dem ersten Funksignal enthalten ist;
einen Sender (13), der dazu eingerichtet ist, ein Sendesignal, das durch ein Kodieren und Modulieren eines zweiten Übertragungsrahmens erlangt ist, in ein zweites Funksignal umzuwandeln und das zweite Funksignal zu senden;
eine Steuereinrichtung (10), die dazu eingerichtet ist,
von dem ersten Übertragungsrahmen, der durch den Empfänger (12) demoduliert und decodiert ist, erste Daten zu erlangen, um die ersten Daten zu verarbeiten, und
den zweiten Übertragungsrahmen zu erzeugen, der zu übertragende zweite Daten enthält, um für den Sender (13) den zweiten Übertragungsrahmen vorzusehen; und
eine Stromzufuhr (15), die dazu eingerichtet ist, den Empfänger (12), den Sender (13) und die Steuereinrichtung (10) mit Strom zu versorgen, wobei
die Steuereinrichtung (10) für Folgendes ausgelegt ist:
Empfangen eines Synchronisationssignals von einer Basisstation (2) in festen Intervallen;
nach einem Verstreichen einer vorbestimmten Zeitspanne ausgehend von einem Zeitpunkt, in dem das Synchronisationssignal empfangen wurde, Zählen eines Durchgangs eines periodischen Empfangsintervalls (T1) mit einer konstanten Periode, um den Empfänger (12) immer dann zu aktivieren, wenn ein Durchgang jedes periodischen Empfangsintervalls (T1) zu Ende gezählt ist; und
unmittelbares Anhalten des Empfängers (12), um den Empfänger (12) in einen Bereitschaftszustand zu versetzen, wenn ein Empfangssignalstärkeanzeigesignal von dem Empfänger (12) unterhalb eines Schwellwerts liegt,
Weiterbetreiben des Empfängers (12), wenn das Empfangssignalstärkeanzeigesignal von dem Empfänger größer oder gleich dem Schwellwert ist, wobei der Empfänger (12) eine Präambel eines ersten Funksignals erfasst, und
Erzeugen des zweiten Übertragungsrahmens, der eine Meldung enthält, die eine Anforderung nach einer erneuten Übertragung des ersten Funksignals beinhaltet, um den Empfänger (12) zu aktivieren, nach dem Vorsehen des zweiten Übertragungsrahmens für den Sender (13), wenn der Empfänger (12) nicht in der Lage ist, die Präambel des ersten Funksignals zu erfassen.

4. Funkkommunikationsvorrichtung (1) nach einem beliebigen der Ansprüche 1 bis 3, wobei die Steuereinrichtung (10) für Folgendes ausgelegt ist:
Starten eines Zähldurchgangs jedes periodischen Empfangsintervalls (T1) in Synchronisation mit dem Synchronisationssignal, das durch den Empfänger (12) empfangen ist, und
Weiterbetreiben des Empfängers (12), wenn ein Empfang des Synchronisationssignals fehlschlägt.

5. Funkkommunikationsvorrichtung (1) nach Anspruch 1, wobei die Steuereinrichtung (10) dazu eingerichtet ist, wenn der Empfänger (12) die betreffende Funkwellen empfängt, den Empfänger (12) nach dem Verstreichen der Bereitschaftszeit (T2) ausgehend von einem Endpunkt einer Empfangsperiode, an dem der Empfänger (12) die betreffenden Funkwellen empfängt, zu aktivieren.

6. Funkkommunikationsvorrichtung (1) nach Anspruch 5, wobei der Endpunkt der Empfangsperiode, an dem der Empfänger (12) die betreffende Funkwellen empfängt, ein Punkt ist, an dem ein Empfangssignalstärkeanzeigesignal des Empfängers (12) einen Schwellwert unterschreitet.

7. Funkkommunikationsvorrichtung (1) nach einem beliebigen der Ansprüche 1 bis 6, wobei der Empfänger (12) die Präambel des Funksignals erfasst, um eine Bit-Synchronisierung zu errichten, und anschließend ein eindeutiges Wort davon erfasst, um eine Rahmensynchronisation zu errichten, um den Übertragungsrahmen (4) des Funksignals zu demodulieren und zu decodieren.

8. Funkkommunikationssystem, aufweisend:
eine Funkkommunikationsvorrichtung (1) nach einem beliebigen der Ansprüche 1 bis 7; und
eine Basisstation, die dafür ausgelegt ist, mit der Funkkommunikationsvorrichtung (1) zu kommunizieren.

## Revendications

1. Appareil de communication radio (1) comprenant :
un récepteur (12) conçu pour recevoir un signal radio dont le médium de communication est des ondes radio et pour démoduler et décoder une trame de transmission (4) contenue dans le signal radio ;
un contrôleur (10) conçu pour obtenir des données à partir de la trame de transmission (4) démodulée et décodée par le récepteur (12) pour traiter les données ; et
une alimentation (15) conçue pour alimenter le récepteur (12) et le contrôleur (10),
le contrôleur (10) étant conçu pour :
recevoir un signal de synchronisation en provenance d'une station de base (2) à des intervalles fixes ;
après l'écoulement d'un temps déterminé à partir d'un moment où le signal de synchronisation a été reçu, compter le passage d'un intervalle de réception intermittent (T1) avec une période constante pour activer le récepteur (12) lorsque le passage de chaque intervalle de réception intermittent (T1) a fini d'être compté ; et
arrêter le récepteur (12) immédiatement pour décaler le récepteur (12) vers un état de veille lorsqu'un signal d'indication d'intensité de signal de réception en provenance du récepteur (12) est inférieur à un seuil,
maintenir le récepteur (12) en fonctionnement lorsque le signal d'indication d'intensité du signal de réception en provenance du récepteur (12) est égal ou supérieur au seuil auquel le récepteur (12) capture un préambule du signal radio et
réactiver le récepteur (12) après l'écoulement d'un temps de veille déterminé (T2) à partir d'un moment où le signal d'indication d'intensité de signal de réception du récepteur (12) est inférieur au seuil, le temps de veille (T2) étant réglé de façon à être égal ou inférieur à un temps jusqu'à ce que le signal radio soit retransmis.

2. Appareil de communication radio (1) comprenant :
un récepteur (12) conçu pour recevoir un signal radio dont le médium de communication est des ondes radio et pour démoduler et décoder une trame de transmission (4) contenue dans le signal radio ;
un contrôleur (10) conçu pour obtenir des données à partir de la trame de transmission (4) démodulée et décodée par le récepteur (12) pour traiter les données ; et
une alimentation (1) conçue pour alimenter le récepteur (12) et le contrôleur (10),
le contrôleur (10) étant conçu pour :
recevoir un signal de synchronisation en provenance d'une station de base (2) à des intervalles fixes ;
après l'écoulement d'un temps déterminé à partir d'un moment où le signal de synchronisation a été reçu, compter le passage d'un intervalle de réception intermittent (T1) avec une période constante pour activer le récepteur (12) lorsque le passage de chaque intervalle de réception intermittent (T1) a fini d'être compté ; et
arrêter le récepteur (12) immédiatement pour décaler le récepteur (12) vers un état de veille lorsqu'un signal d'indication d'intensité de signal de réception en provenance du récepteur (12) est inférieur à un seuil,
maintenir le récepteur (12) en fonctionnement lorsque le signal d'indication d'intensité du signal de réception en provenance du récepteur (12) est égal ou supérieur au seuil auquel le récepteur (12) capture un préambule du signal radio et
étendre un temps de fonctionnement du récepteur (12) jusqu'à un temps de durée de réception (T4) déterminé qui est réglé de façon à être égal ou supérieur à une somme d'un temps jusqu'à ce que le signal radio soit retransmis et d'une période de transmission du signal radio, lorsque le récepteur (12) échoue à le préambule du signal radio.

3. Appareil de communication radio (1) comprenant :
un récepteur (12) conçu pour recevoir un premier signal radio dont le médium de communication est des ondes radio et pour démoduler et décoder une première trame de transmission contenue dans le premier signal radio ;
un transmetteur (13) conçu pour convertir un signal de transmission obtenu par le codage et la modulation d'une deuxième trame de transmission en un deuxième signal radio et pour transmettre le deuxième signal radio ;
un contrôleur (10) conçu pour
obtenir des premières données à partir de la première trame de transmission démodulée et décodée par le récepteur (12) pour traiter les premières données et
générer la deuxième trame de transmission contenant des deuxièmes données à transmettre pour fournir au transmetteur (13) la deuxième trame de transmission ; et
une alimentation (15) conçue pour alimenter le récepteur (12), le transmetteur et le contrôleur (10),
le contrôleur (10) étant conçu pour :
recevoir un signal de synchronisation en provenance d'une station de base (2) à des intervalles fixes ;
après l'écoulement d'un temps déterminé à partir d'un moment où le signal de synchronisation a été reçu, compter le passage d'un intervalle de réception intermittent (T1) avec une période constante pour activer le récepteur (12) lorsque le passage de chaque intervalle de réception intermittent (T1) a fini d'être compté ; et
arrêter le récepteur (12) immédiatement pour décaler le récepteur (12) vers un état de veille lorsqu'un signal d'indication d'intensité de signal de réception en provenance du récepteur (12) est inférieur à un seuil,
maintenir le récepteur (12) en fonctionnement lorsque le signal d'indication d'intensité du signal de réception en provenance du récepteur (12) est égal ou supérieur au seuil auquel le récepteur (12) capture un préambule du signal radio et
générer la deuxième trame de transmission contenant un message représentant une requête de retransmission du premier signal radio pour activer le récepteur (12) après la fourniture au transmetteur (13) de la deuxième trame de transmission lorsque le récepteur (12) échoue à capturer le préambule du premier signal radio.

4. Appareil de communication radio (1) selon l'une des revendications 1 à 3, dans lequel le contrôleur (10) est conçu pour
démarrer le comptage du passage de chaque intervalle de réception intermittent (T1) en synchronisation avec le signal de synchronisation reçu par le récepteur (12) et
faire fonctionner en continu le récepteur (12) lorsque le signal de synchronisation n'est pas reçu.

5. Appareil de communication radio (1) selon la revendication 1, dans lequel le contrôleur (10) est conçu pour activer, lorsque le récepteur (12) reçoit les ondes radio prévues, le récepteur (12) après l'écoulement du temps de veille (T2) à partir d'un moment final d'une période de réception dans laquelle le récepteur (12) reçoit les ondes radio prévues.

6. Appareil de communication radio (1) selon la revendication 5, dans lequel le moment final de la période de réception dans laquelle le récepteur (12) reçoit les ondes radio prévues est un moment auquel un signal d'indication d'intensité de signal de réception du récepteur (12) tombe en dessous d'un seuil.

7. Appareil de communication radio (1) selon l'une des revendications 1 à 6, dans lequel le récepteur (12) capture le préambule du signal radio afin d'établir une synchronisation binaire puis capture un mot unique de celui-ci afin d'établir une synchronisation de trame pour démoduler et décoder la trame de transmission (4) du signal radio.

8. Système de communication radio comprenant :
un appareil de communication radio (1) selon l'une des revendications 1 à 7 ; et
une station de base conçue pour communiquer avec l'appareil de communication radio (1).
